# EUROPEAN PATENT SPECIFICATION

(11) **EP 3 933 266 B1**
(45) Date of publication and mention of the grant of the patent: **05.11.2025**
(21) Application number: 19917331.1
(22) Date of filing: 20.09.2019
(51) Int. Cl.: F23J 15/02, F23J 15/06, F23J 15/00, F23J 15/08, F23G 7/00, F23G 5/30, F23L 15/04, F23L 5/02

(54) **APPARATUS AND METHOD FOR PROCESSING COMBUSTION EXHAUST GAS**
VORRICHTUNG UND VERFAHREN ZUR BEHANDLUNG VON VERBRENNUNGSABGASEN
APPAREIL ET PROCÉDÉ DE TRAITEMENT DE GAZ D'ÉCHAPPEMENT DE COMBUSTION

(30) Priority: 28.02.2019 JP 2019036258
(43) Date of publication of application: 05.01.2022
(73) Proprietor: Tsukishima JFE Aqua Solution Co., Ltd., Chuo-ku Tokyo (JP)
(72) Inventor: KAWAGISHI, Masayasu, Tokyo 104-0053 (JP); NAGASAWA, Hidekazu, Tokyo 104-0053 (JP); YAMATO, Tsuneo, Tokyo 104-0053 (JP); KOBAYASHI, Toshiki, Tokyo 104-0053 (JP)
(74) Representative: Müller-Boré & Partner Patentanwälte PartG mbB
(86) International application number: PCT/JP2019/036975
(87) International publication number: WO 2020/174730

(56) References cited:
- WO-A1-2011/142376
- CN-A- 105 570 883
- CN-A- 106 642 087
- JP-A- 2000 237 539
- JP-A- 2007 205 689
- JP-A- 2007 205 689
- JP-A- 2009 121 778
- JP-A- H03 207 908
- JP-B2- 5 187 731

## Description

### Technical Field

The present invention relates to a processing apparatus and a processing method for combustion exhaust gas from a combustion unit.

### Background Art

Combustion exhaust gas from combustion units, for example, such as a waste incinerator, a sewage sludge incinerator, and the like is usually discharged at on the order of 850°C to suppress the generation of dioxin. It is important to recover the heat of the high-temperature exhaust gas in the subsequent processing system and utilize the heat effectively.

As one of the methods for recovering the heat and reducing the operating cost, the applicant of the present invention has disclosed a mode that uses a turbocharger provided with a turbine and a compressor that rotates as the turbine rotates in Patent Literature 1 and the like.

This mode is suitable as a combustion unit to apply for a fluidized bed incinerator that generates high-temperature combustion exhaust gas, and as the fluidizing air for the fluidized medium of the fluidized bed incinerator, the high-temperature combustion exhaust gas drives the turbine without using a dedicated blower, the compressor generates compressed air, and it is possible to utilize this compressed air as the fluidizing air for the fluidized medium of the fluidized bed incinerator, so the dedicated blower and the operating cost (electricity cost) for operating it are not required, and it is possible to utilize the heat effectively for the entire system.

On the one hand, the combustion exhaust gas of combustion furnaces such as waste incinerators, sewage sludge incinerators, and the like contains Pb, Cd, As, Se, organic phosphorus, and various types of dust, and it is required to extract dust to prevent these from being released into the atmosphere.

Various dust collectors are used for this dust extraction. On the other hand, in the combustion furnace, combustion is performed so that the temperature of the combustion exhaust gas is usually around 850°C in order to prevent the generation of dioxins. Typical examples of means for extracting dust from this high-temperature combustion exhaust gas at a high temperature include a ceramic filter, an electrostatic precipitator, and a cyclone.

However, each of these has the following problems.

### (1) Ceramic filter

In recent years, there have been many cases where a high-temperature dust collector using the ceramic filter is used. While it has the advantage of ensuring high dust collection efficiency in the high-temperature range, the filter is a brittle material and requires careful handling. The high-temperature dust collector itself becomes large, which is disadvantageous in terms of cost and installation space.

Also, for example, in an incinerator for sewage sludge, there is a problem such as that high-temperature corrosion occurs due to water vapor in the casing.

### (2) Electrostatic precipitator

The collection efficiency is determined by the electric resistance value of the dust, and the dust collection efficiency may drop significantly in the high-temperature range. Also, the dust collection efficiency is reduced because the dust is scattered again at the time of hammering.

### (3) Cyclone

Dust is collected by centrifugal force. When increasing the size, the separation limit particle size increases, and the dust collection efficiency decreases.

JP 2000 237539 A describes a treatment method of exhaust gas from an incinerator and a treatment device therefor by which the moisture of the exhaust gas does not increase, and energy such as steam is not required to be supplied from the outside when heating the exhaust gas in order to introduce it into a denitration device.

JP 2007 205689 A describes a waste combustion exhaust gas processing method capable of preventing an exhaust gas exhausted into the atmosphere from changing into white smoke at relatively low cost.

JP 2019 121778 A describes a pressurized fluidized incineration facility and a method for operating the pressurized fluidized incineration facility.

### Citation List

### Patent Literature

Patent Literature 1: JP 5187731 B2

### Summary of Invention

### Technical Problem

Therefore, a main object of the present invention is to achieve high dust collection efficiency and to effectively recover and utilize the heat contained in the combustion exhaust gas. The present invention is defined by the independent claims. Preferred examples are defined in the dependent claims.

### Solution to Problem

Some aspects not forming part of the present invention, and aspects forming part of the present invention that have solved the problems described above are as follows.

### <First aspect (not part of the present invention)>

A combustion exhaust gas processing apparatus includes
a reheating pre-heater through which a high-temperature combustion exhaust gas passes and which performs reheating with the combustion exhaust gas,
a bag filter that extracts dust from the combustion exhaust gas to make a clean gas,
a cooling unit that is provided in a path that guides an exhaust gas from the reheating pre-heater to the bag filter and performs heat exchange to cool the exhaust gas to an operating temperature of the bag filter,
a reheating return unit that guides the clean gas from the bag filter to the reheating pre-heater to perform reheating, and
a utilization unit of a reheated clean gas that has passed through the reheating pre-heater.

In this first aspect, included is a cooling unit that cools the exhaust gas from the reheating pre-heater to the operating temperature of the bag filter by performing heat exchange on the exhaust gas.

It is cooled to, for example, 250°C or lower by the cooling unit. There are many types of (low temperature) bag filters that extract dust at 250°C or lower, and in general, the dust collection efficiency is high, so it is possible to extract dust reliably.

It is possible to recover the heat contained in the combustion exhaust gas along with cooling by the cooling unit. As the cooling unit, for example, it is possible to use a waste heat boiler or a heat exchanger and utilize the recovered heat for a drying heat source or power generation.

The clean gas from the bag filter is guided (returned) to the reheating pre-heater and reheated. The reheated clean gas can be used by a utilization unit that requires a certain degree of high temperature under the condition that the gas is clean.

It is possible to use a waste heat boiler or a heat exchanger as the cooling unit, and it is desirable to increase the amount of heat recovered by the cooling unit. In a case that a cooling unit (for example, a waste heat boiler or a heat exchanger) is not provided, or in a case that the amount of cooling by the cooling unit is small, it is required to increase the amount of cooling heat exchange by the reheating pre-heater, and therefore, a large-sized reheating pre-heater is required. In this case, in the reheating pre-heater, it is required to perform cooling heat exchange on the combustion exhaust gas from a high-temperature state to a low temperature, and the combustion exhaust gas inlet portion of the reheating pre-heater, especially the tube plate portion of the heat transfer tube is always exposed to the high-temperature gas, resulting in an risk of cracking thereof.

On the other hand, by providing the cooling unit and raising the outlet exhaust gas temperature of the reheating pre-heater according to the first aspect, it is possible to reduce the burden (the amount of heat exchange) in the reheating pre-heater, that is, reduce the amount of reheating, and it is possible to solve the problems with the reheating pre-heater.

### <Second aspect (not part of the present invention)>

When the source of high-temperature combustion exhaust gas is a fluidized bed incinerator, as an example of utilization unit, it is possible to mention a turbocharger provided with a turbine driven by reheated clean gas and a compressor that rotates as the turbine rotates.

It is possible to send the compressed air generated by the compressor of this turbocharger as fluidizing air for the fluidized medium of the fluidized bed incinerator.

With such a configuration, it is not required to prepare a blower that sends air as the fluidizing air for the fluidized medium of the fluidized bed incinerator, and it is possible to reduce the operating cost (electric power cost required for operating the blower).

The type of utilization unit is not limited, and in addition to the turbocharger described above, for example, a catalytic reaction device using a catalytic reaction, for example, a denitration device filled with a catalyst or the like can be mentioned.

### <Third aspect (in accordance with the present invention)>

The fact that a waste heat boiler or a heat exchanger can be used as the cooling unit is as described in the section of the description of the first aspect described above.

In order to increase the amount of recovered heat, in addition to the cooling unit for cooling the exhaust gas supplied to the bag filter, a second cooling unit is provided at a subsequent stage of the turbocharger and receives the turbine exhaust gas of the turbocharger.

When it is desired to secure a certain degree of amount of recovered heat even though the outlet temperature of the reheating pre-heater is not high, it is required to increase the size of the cooling unit, which is not economically advantageous.

In view of these reasons, heat not only by the cooling unit but also by the second cooling unit provided at the subsequent stage of the turbocharger is recovered, according to the third aspect. That eliminates the need to increase the size of the cooling unit.

In addition, it is also possible to provide a plurality of cooling units between the reheating pre-heater and the bag filter.

### <Fourth aspect (not part of the present invention)>

Depending on the size, operating conditions, and the like of the combustion unit, for example, the combustion furnace, each device, arrangement, and the like are designed in advance, and the actual system is operated. However, in the case of a combustion furnace, for example, a fluidized bed incinerator, the properties of the sewage sludge to be incinerated, particularly the water content, the amount of sewage sludge input per hour, and the like fluctuate.

Along with these fluctuations, the outlet temperature of the reheating pre-heater fluctuates subordinately (by circumstances). When this fluctuation occurs, a situation in which the utilization unit cannot exhibit a predetermined performance occurs.

For example, even if the turbocharger is selected so as to exhibit a predetermined performance in relation to the outlet temperature of the reheating pre-heater in advance, a situation in which the original performance is not exhibited may occur.

Therefore, it is possible to provide a bypass path capable of adjusting the amount of bypass, for example, a bypass path including a bypass flow adjusting valve, that connects the outlet side of the bag filter and the outlet side of the reheated clean gas of the reheating pre-heater.

According to this aspect, it is possible to make the temperature of the exhaust gas supplied from the reheating pre-heater to the utilization unit constant by adjusting the amount of bypass in response to the fluctuation of the combustion exhaust gas flowing into the reheating pre-heater. As a result, there is an advantage that the utilization unit can be operated at the most advantageous temperature in terms of its performance characteristics.

### <Fifth aspect (not part of the present invention)>

Instead of passing the high-temperature combustion exhaust gas directly through the reheating pre-heater, it can be passed through a (combustion air) pre-heater at the preceding stage of the reheating pre-heater. The fifth aspect is as follows.

A combustion exhaust gas processing apparatus includes
a pre-heater through which a combustion exhaust gas from a fluidized bed incinerator passes,
a reheating pre-heater that performs reheating with the combustion exhaust gas that has passed through the pre-heater,
a bag filter that extracts dust from the combustion exhaust gas to make a clean gas,
a cooling unit that is provided in a path that guides an exhaust gas from the reheating pre-heater to the bag filter and performs heat exchange to cool the exhaust gas to an operating temperature of the bag filter,
a reheating return unit that guides the clean gas from the bag filter to the reheating pre-heater to perform reheating, and
a utilization unit of the reheated clean gas that has passed through the reheating pre-heater,
in which the utilization unit is a turbocharger provided with a turbine driven by the reheated clean gas and a compressor that rotates as the turbine rotates, and
compressed air generated by the compressor of the turbocharger is sent as fluidizing air for a fluidized medium of the fluidized bed incinerator through the pre-heater.

According to the fifth aspect, instead of passing the high-temperature combustion exhaust gas from a fluidized bed incinerator directly through the reheating pre-heater, by passing it through a (combustion air) pre-heater at the preceding stage of the reheating pre-heater, when sending the compressed air generated by the compressor of the turbocharger as fluidizing air for the fluidized medium of the fluidized bed incinerator, it can be supplied to the combustion furnace as high-temperature compressed air, and it is possible to reduce or eliminate auxiliary fuel when incinerating sewage sludge and the like with a high water content or a small calorific value in the combustion furnace.

### <Sixth aspect (not part of the present invention)>

In the embodiment described above, it is possible to incorporate a means for raising the temperature of the exhaust gas from the chimney to prevent white smoke. The pre-heater for preventing white smoke is provided at the subsequent side stage of the turbine of the turbocharger, and it is possible to introduce the heated air after heat exchange with the turbine into the exhaust gas flow path in the chimney.

On the other hand, a pre-heater for preventing white smoke is provided between the reheating pre-heater and the bag filter, and it is possible to use this pre-heater for preventing white smoke as a cooling unit that performs heat exchange to cool the exhaust gas from the reheating pre-heater to an operating temperature of the bag filter and guides the exhaust gas to the bag filter. This pre-heater for preventing white smoke cools the exhaust gas and then supplies it to the chimney to raise the temperature of the exhaust gas to prevent white smoke.

### <Aspect of processing method>

The combustion exhaust gas is treated as described above for the third aspect.

As this processing method, it is desirable to set the inlet temperature of the bag filter to 250°C or lower, and it is particularly preferable to set it to 230°C or lower. It is desirable to set the inlet temperature of the bag filter to a temperature higher than the acid dew point temperature at which corrosion does not occur, i.e., for example, 190°C or higher.

Examples of the bag-shaped filter material include cotton, nylon, metal fiber, glass fiber, and the like.

On the other hand, it is desirable that the inlet temperature of the cooling unit is 750 to 500°C. Then, by cooling the inlet temperature of the bag filter to a temperature of 250°C or lower by the cooling unit, it is possible to obtain a large amount of recovered heat. As a result that the amount of recovered heat becomes large, the energy efficiency of the system (equipment) as a whole becomes high.

### Advantageous Effects of Invention

As described above, according to the present invention, obtained are advantages that dust collection efficiency is high and it is possible to recover and utilize heat contained in the combustion exhaust gas effectively.

### Brief Description of Drawings

Fig. 1 is a schematic view illustrating an embodiment of the present invention.
Fig. 2 is a schematic diagram illustrating another embodiment not belonging to the present invention.
Fig. 3 is a schematic diagram illustrating yet another embodiment not belonging to the present invention.
Fig. 4 is a schematic diagram illustrating another embodiment not belonging to the present invention.
Fig. 5 is a schematic diagram illustrating yet another embodiment not belonging to the present invention.
Fig. 6 is a schematic view illustrating another embodiment not belonging to the present invention.

### Description of Embodiments

Hereinafter, embodiments of the present invention and embodiments not according to the invention will be described with reference to the accompanying drawings. Note that the same reference numeral is assigned to the parts having a common function. Therefore, the description regarding the technical significance of the parts having the same reference numeral may be omitted in some cases.

Also, it should be noted that it is possible to make various modifications regarding the embodiments described below. The numerical values indicated in parentheses in the drawings are exemplary or typical water content and temperature and are not limited to such water content and temperature in each of the following examples.

### <First aspect (not part of the present invention)>

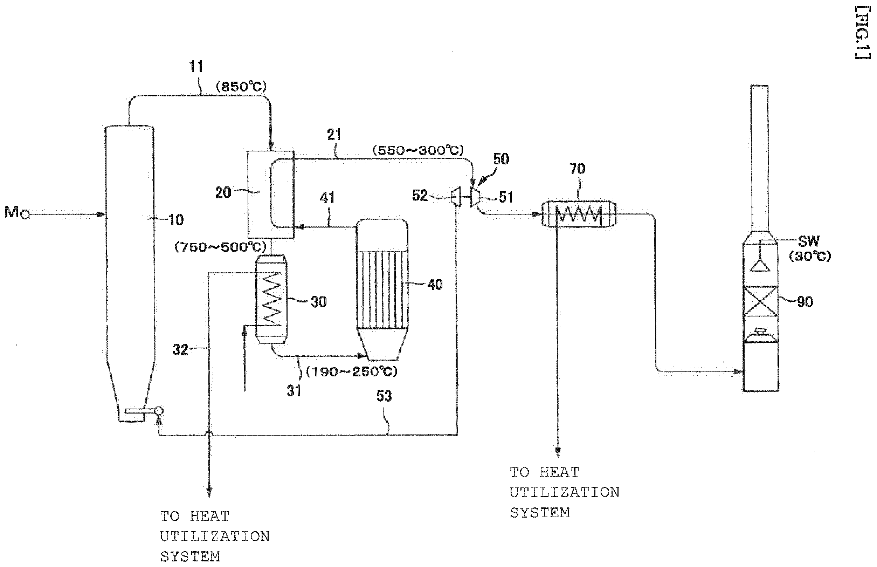

Fig. 1 shows an embodiment of the present invention and illustrates an example of the first aspect, which first aspect is not in accordance with the invention, however. Reference numeral 10 denotes a fluidized bed incinerator, for example, an example in which sewage sludge M is targeted for incineration.

The water content of the raw sewage sludge M can be reduced by a concentrator and a dehydrator (not illustrated in the drawings) before being charged into the fluidized bed incinerator 10. The example in Fig. 1 is an example of incinerating dehydrated sludge that self-combusts without preheating the combustion air.

The dehydrated sludge M is charged into the fluidized bed incinerator 10, and in the fluidized bed incinerator 10, fluidizing air from a conduit 53 is blown up from below through a dispersing unit (not illustrated in the drawings) such as a dispersion plate, and it is incinerated while fluidizing along with a fluidized medium such as fluidized sand as a bed material and the like.

In the first aspect, combustion and incineration are performed in the fluidized bed incinerator 10 at a combustion temperature that prevents the generation of dioxins, and the high-temperature combustion exhaust gas of the order of, for example, 850°C from the top of the fluidized bed incinerator 10 is passed through a conduit 11 and a reheating pre-heater 20 that performs reheating with this combustion exhaust gas.

Also, included are a bag filter 40 that extracts dust from the combustion exhaust gas and a cooling unit 30 that performs heat exchange to cool the exhaust gas from the reheating pre-heater 20 to an operating temperature of the bag filter 40 and guides the exhaust gas to the bag filter 40 via a conduit 31.

Regarding the clean gas treated by the bag filter 40, provided is a conduit 41 as a reheating return unit that guides the clean gas to the reheating pre-heater 20 to perform reheating.

On the other hand, the reheated clean gas that has passed through the reheating pre-heater 20 is guided to the reheated clean gas utilization unit via a conduit 21.

In the first aspect, it is a turbocharger 50 provided with a turbine 51 driven by a reheated clean gas and a compressor 52 that subordinately rotates via a connecting shaft as the turbine 51 rotates.

The cooling unit 30 performs heat exchange to cool the exhaust gas from the reheating pre-heater 20 (for example, 750 to 500°C) to an operating temperature of the bag filter 40 (for example, 190 to 250°C) and guides the exhaust gas to the bag filter 40 via the conduit 31.

By the cooling unit 30, the temperature is cooled to 250°C or lower, for example. In the bag filter 40, dust is extracted under the condition of 250°C or less. There are many types of (low temperature) bag filters of this type, and generally, the dust collection efficiency is high, so it is possible to extract dust reliably.

It is possible to recover the heat contained in the combustion exhaust gas by cooling by the cooling unit 30. As the cooling unit 30, for example, it is possible to use a waste heat boiler or a heat exchanger, and it is possible to be effectively used as a heat source for power generation or a heat source for drying via a conduit 32.

### <Second aspect (not part of the present invention)>

As described above, as illustrated in Figs. 1 to 5, as the utilization unit, it is possible to mention the turbocharger 50 provided with the turbine 51 driven by the reheated clean gas and the compressor 52 that rotates as the turbine 51 rotates.

It is possible to send the compressed air generated by the compressor 52 of the turbocharger 50 as fluidizing air for the fluidized medium of the fluidized bed incinerator 10.

With such a configuration, it is not required to prepare a blower that sends air as the fluidizing air for the fluidized medium of the fluidized bed incinerator 10, and it is possible to reduce the operating cost (electric power cost required for operating the blower).

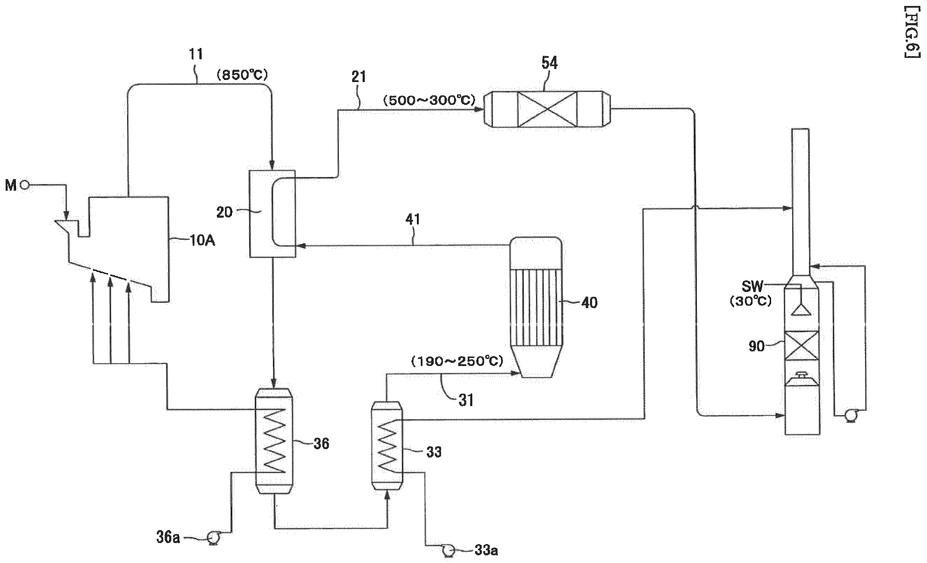

The type of utilization unit is not limited, and in addition to the turbocharger 50 described above, a catalytic reaction device, for example, a denitration device filled with a catalyst or the like can be mentioned. An example of this denitration device will be described by the example illustrated in Fig. 6 described later. The denitration device can be comprised of a catalytic device or the like that performs reductive decomposition of nitrogen oxides contained in the exhaust gas by using ammonia or the like and a catalyst.

### <Third aspect (in accordance with the present invention)>

As the cooling unit 30, the waste heat boiler or the heat exchanger, as described in the above-mentioned column of the description of the first aspect.

In order to increase the amount of recovered heat, in addition to the cooling unit that guides the exhaust gas to the bag filter 40, as illustrated in Fig. 1, which shows an embodiment of the present invention, a waste heat boiler and a heat exchanger as a second cooling unit 70, that receives the exhaust gas from the turbine 51 of the turbocharger 50, at the subsequent stage of the turbocharger 50 is provided.

Here, the heat recovered by the cooling unit 30 and a second heat recovery unit 70 are directed as a heat source for drying or a heat source for power generation in a utilization device such as a dryer or a power generation device.

At this time, the heat recovered from each of the cooling unit 30 and the heat recovery unit 70 is directed to the utilization device.

As the heating medium supplied to the cooling unit 30 and the second heat recovery unit 70, water vapor, hydraulic oil, air, heat medium oil, or the like can be adopted. In particular, when utilizing the heat recovered from the cooling unit 30 and the heat recovery unit 70 in the same utilization device, it is preferable to adopt a heating medium (for example, hydraulic oil or the like) capable of supplying the recovered heat in liquid form to the utilization device, since the pressure adjustment of the heating medium is omitted even if the amount of heat exchanged between the cooling unit 30 and the heat recovery unit 70 is different.

Note that, when using the recovered heat, it is also possible to use it not only for a single utilization purpose but also for a plurality of utilization purposes, a heat source for drying and a heat source for power generation.

Incidentally, if the cooling unit (for example, the waste heat boiler or heat exchanger) 30 is, not according to the invention, not provided, or if the amount of cooling by the cooling unit is small, it is required to increase an amount of cooling heat exchange in the reheating pre-heater 20, which requires a large-sized reheating pre-heater 20. In this case, in the reheating pre-heater 20, it is required to perform cooling heat exchange on the combustion exhaust gas from a high-temperature state to a low temperature, and the combustion exhaust gas inlet portion of the reheating pre-heater 20, especially the tube plate portion of the heat transfer tube is always exposed to the high-temperature gas, resulting in an increased risk of cracking.

On the other hand, by providing the cooling unit 30 according to the present invention and raising the outlet exhaust gas temperature of the reheating pre-heater 20, it is possible to reduce the burden (the amount of heat exchange) on the reheating pre-heater 20, that is, reduce the amount of reheating, thus solving the problem in the reheating pre-heater 20.

Also, as for the amount of cooling heat exchange in the reheating pre-heater 20, it is desirable that the temperature difference between the combustion exhaust gas temperature at the inlet of the reheating pre-heater 20 and the reheating clean gas temperature at the outlet of the reheating pre-heater 20 is 300 to 550°C.

### <Fourth aspect (not part of the present invention)>

Depending on the size, operating conditions, and the like of combustion unit, for example, the combustion furnace, each device, arrangement, and the like are designed in advance, and the actual system is operated. However, in the case of a combustion furnace, for example, a fluidized bed incinerator, the properties of the sewage sludge to be incinerated, particularly the water content, the amount of sewage sludge input per hour, and the like fluctuate.

Along with these fluctuations, the outlet temperature of the reheating pre-heater 20 fluctuates subordinately (by circumstances). When this fluctuation occurs, a situation in which the utilization unit cannot exhibit a predetermined performance occurs.

For example, even if the turbocharger 50 is selected so as to exhibit a predetermined performance in relation to the outlet temperature of the reheating pre-heater 20 in advance, a situation in which the original performance is not exhibited may occur.

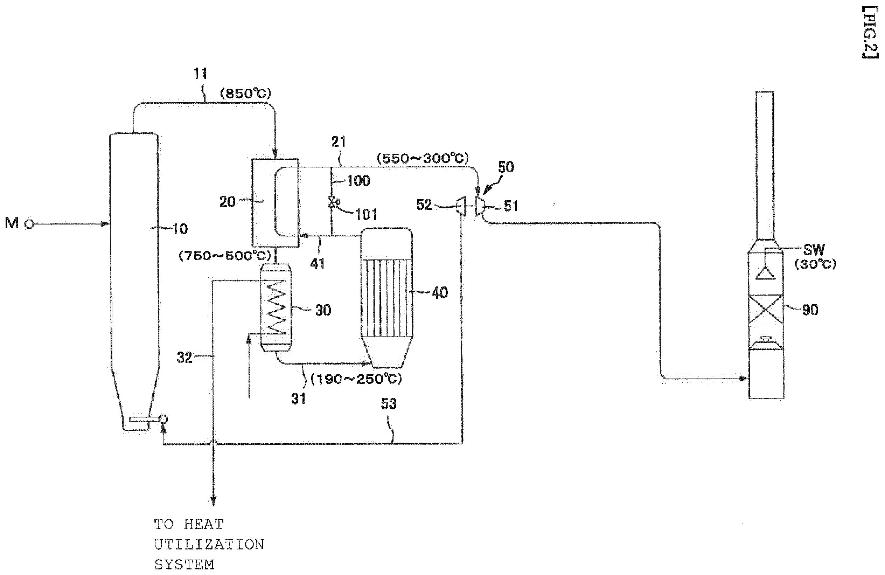

Therefore, as illustrated in Fig. 2, it is possible to provide a bypass path capable of adjusting the flow rate of bypass, for example, a bypass path 100 including a flow control valve 101 for a bypass flow rate, that connects the outlet side of the bag filter 40 and the outlet side of the reheated clean gas of the reheating pre-heater 20.

According to this aspect, it is possible to make the temperature of the clean gas supplied from the reheating pre-heater 20 to the utilization unit constant by adjusting the flow rate of bypass flow in response to the fluctuation of the combustion exhaust gas flowing into the reheating pre-heater 20. As a result, there is an advantage that the utilization unit can be operated at the most advantageous temperature in terms of its performance characteristics.

### <Fifth aspect (not part of the present invention)>

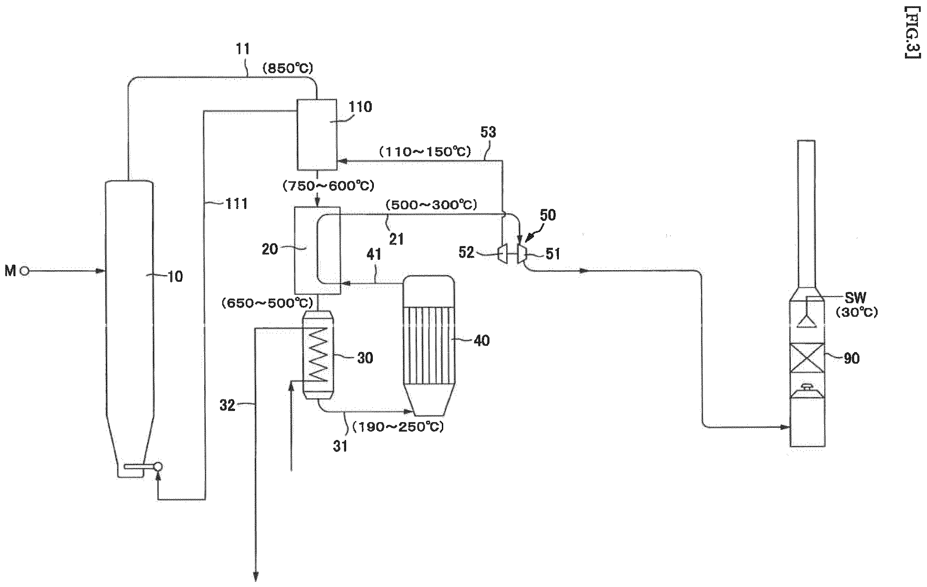

As a suitable example of little high water content dehydrated sludge that self-combusts when the combustion air is preheated, instead of passing the high-temperature combustion exhaust gas directly through the reheating pre-heater 20, it can be passed through the (combustion air) pre-heater 110 at the preceding stage of the reheating pre-heater 20. As an example of the fifth aspect, it is possible to give the examples of Figs. 3, 4, and 5.

In this aspect, as illustrated in Fig. 3, a pre-heater 110 through which high-temperature combustion exhaust gas from the fluidized bed incinerator 10 passes is provided.

The combustion exhaust gas that has passed through the pre-heater 110 is sent to the reheating pre-heater 20 that performs reheating.

Then, it is configured that the compressed air generated by the compressor 52 of the turbocharger 50 passes through the pre-heater 110, and is sent to the fluidized bed incinerator 10 as the fluidizing air for the fluidized medium through a conduit 111.

According to the fifth aspect, the high-temperature combustion exhaust gas does not directly pass through the reheating pre-heater 20, but, it passes through the (combustion air) pre-heater 110 at the preceding stage of the reheating pre-heater 20. As a result, the compressed air generated by the compressor 52 of the turbocharger 50 can be send as fluidizing air for the fluidized medium of the fluidized bed incinerator 10, thus reducing or eliminating auxiliary fuel when incinerating sewage sludge and the like with a high water content or a small calorific value in the fluidized bed incinerator 10.

### <Sixth aspect (not part of the present invention)>

It is possible to incorporate a means for raising the temperature of the exhaust gas from a scrubber (chimney) 90 to prevent white smoke.

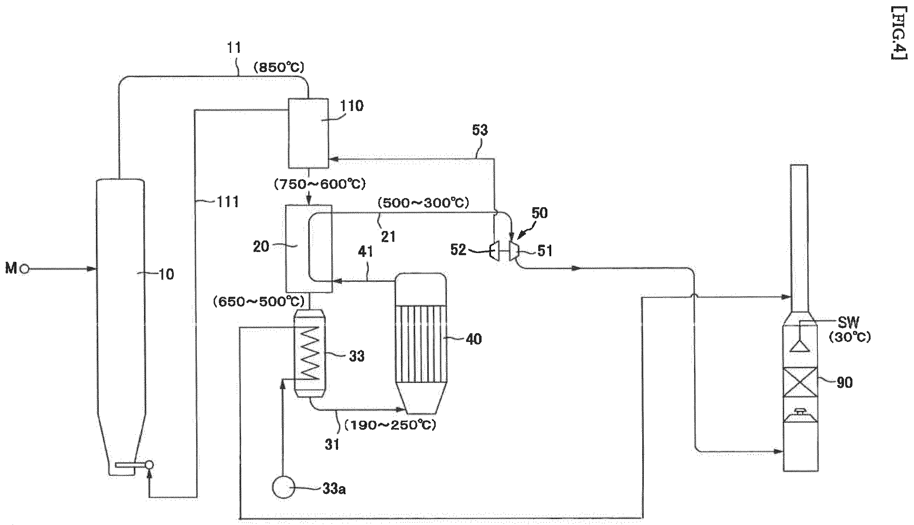

For example, as illustrated in Fig. 4, a pre-heater 33 for preventing white smoke is provided between the reheating pre-heater 20 and the bag filter 40, and the pre-heater 33 for preventing white smoke can have the function of a cooling unit that performs heat exchange between the air from the fan 33a and the exhaust gas from the reheating pre-heater 20 to cool it to the operating temperature of the bag filter 40 and sends the cooling gas to the bag filter 40. The pre-heater 33 for preventing white smoke cools the exhaust gas and then supplies the air to the chimney to raise the temperature of the exhaust gas to prevent white smoke.

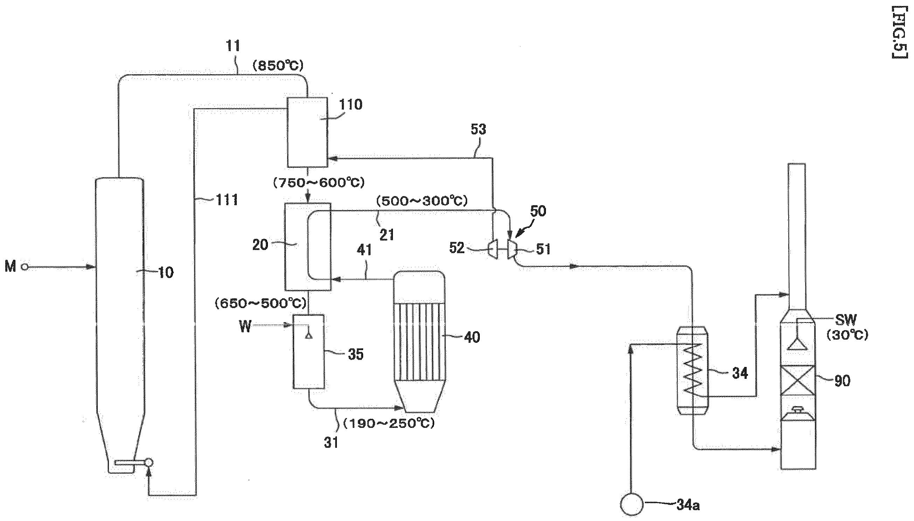

On the other hand, as illustrated in Fig. 5, a pre-heater 34 for preventing white smoke is provided at the subsequent side stage of the turbine 51 of the turbocharger 50, and it is possible to charge the heated air after heat exchange between the air from the fan 34a and the exhaust gas of the turbine 51 into the exhaust gas flow path in the scrubber (chimney) 90.

Also, in the example illustrated in Fig. 5, a cooler 35 that cools by spraying cooling water W is used as a cooling unit for the exhaust gas toward the bag filter 40.

In addition to the fluidized bed incinerator, the combustion system according to the present invention may be a stoker furnace 10A as illustrated in the example of Fig. 6. Also, as the utilization unit, in addition to the turbocharger 50, for example, a catalytic reaction device using a catalytic reaction, for example, a denitration device 54 or the like filled with a catalyst may be used.

In the example illustrated in Fig. 6, the combustion exhaust gas from the stoker furnace 10A is passed through the reheating pre-heater 20 to preheat the clean gas of the bag filter 40, and the exhaust gas passed through the reheating pre-heater 20 is cooled to the operating temperature of the bag filter 40 through the two-stage cooling unit of the combustion air pre-heater 36 and the pre-heater 33 for preventing white smoke.

The clean gas preheated by the reheating pre-heater 20 is sent to the denitration device 54 constituting the utilization unit and then guided to the scrubber (chimney) 90.

The air sent by the fan 36a is heated by the combustion air pre-heater 36 and is supplied to the stoker furnace 10A.

### Reference Signs List

- 10: Fluidized bed incinerator
- 20: Reheating pre-heater
- 30: Cooling unit
- 40: Bag filter
- 41: Conduit (reheating return unit)
- 50: Turbocharger (utilization unit)
- 51: Turbine
- 52: Compressor
- 54: Denitration device (utilization unit)
- 70: Second cooling unit
- 90: Scrubber
- 100: Bypass path
- 101: Flow control valve
- 110: Pre-heater

## Claims

1. A combustion exhaust gas processing apparatus comprising:
a reheating pre-heater (20) through which a high-temperature combustion exhaust gas is adapted to pass and which is adapted to perform reheating with the combustion exhaust gas;
a bag filter (40) that is adapted to extract dust from the combustion exhaust gas to make a clean gas;
a cooling unit that is provided in a path that is adapted to guide an exhaust gas from the reheating pre-heater (20) to the bag filter (40) and is adapted to perform heat exchange to cool the exhaust gas to an operating temperature of the bag filter (40);
a reheating return unit (41) that is adapted to guide the clean gas from the bag filter (40) to the reheating pre-heater (20) to perform reheating; and
a utilization unit (50) of a reheated clean gas that has passed through the reheating pre-heater (20), **characterized in that**
the combustion exhaust gas is adapted to be discharged from a fluidized bed incinerator (10),
the utilization unit (50) is a turbocharger (50) provided with a turbine (51) adapted to be driven by the reheated clean gas and a compressor (52) that is adapted to rotate as the turbine (51) rotates, and **in that**
compressed air generated by the compressor (52) of the turbocharger (50) is adapted to be sent as fluidizing air for a fluidized medium of the fluidized bed incinerator (10), and
**in that** the cooling unit is a first cooling unit (30) comprised of a waste heat boiler or a heat exchanger and a second cooling unit (70) that is provided at a subsequent stage of the turbocharger (50) and is adapted to perform heat exchange receiving a turbine exhaust gas of the turbocharger (50) is included, and **in that**
heat recovered by heat exchange in the first cooling unit (30) and the second cooling unit (70) is adapted to be used as a heat source of at least one of a heat source for drying and a heat source for power generation.

2. An incineration facility comprising the combustion exhaust gas processing apparatus according to claim 1.

3. A combustion exhaust gas processing method comprising steps of:
performing reheat-preheating with a high-temperature combustion exhaust gas;
extracting dust from the combustion exhaust gas by a bag filter (40) to make a clean gas;
performing heat exchange by a cooling unit that is provided in a path that guides an exhaust gas from the reheat-preheating step to the bag filter (40) to cool the exhaust gas to an operating temperature of the bag filter (40);
guiding the clean gas from the bag filter (40) to the reheat-preheating step to perform reheating; and
utilizing a reheated clean gas that has passed through the reheat-preheating step, **characterized in that**
the combustion exhaust gas is discharged from a fluidized bed incinerator,
the utilization unit is a turbocharger provided with a turbine driven by the reheated clean gas and a compressor that rotates as the turbine rotates, and **in that**
compressed air generated by the compressor of the turbocharger is sent as fluidizing air for a fluidized medium of the fluidized bed incinerator, and **in that**
wherein the cooling unit is a first cooling unit (30) comprised of a waste heat boiler or a heat exchanger and a second cooling unit (70) that is provided at a subsequent stage of the turbocharger (50) and performs heat exchange receiving a turbine exhaust gas of the turbocharger (50) is included, and **in that**
heat recovered by heat exchange in the first cooling unit (30) and the second cooling unit (70) is used as a heat source of at least one of a heat source for drying and a heat source for power generation.

4. The combustion exhaust gas processing method according to claim 3,
wherein inlet temperature of the bag filter (40) is 250°C or lower.

## Patentansprüche

1. Verarbeitungsvorrichtung für Verbrennungsabgase, umfassend:
einen Wiedererwärmungsvorwärmer (20), durch den ein Verbrennungsabgas mit hoher Temperatur strömen kann und der angepasst ist, um eine Wiedererwärmung mit dem Verbrennungsabgas durchzuführen;
einen Beutelfilter (40), der angepasst ist, um Staub aus dem Verbrennungsabgas zu entfernen, um ein sauberes Gas zu erzeugen;
eine Kühleinheit, die in einem Pfad bereitgestellt ist, der angepasst ist, um ein Abgas von dem Wiedererwärmungsvorwärmer (20) zu dem Beutelfilter (40) zu leiten, und angepasst ist, um einen Wärmeaustausch durchzuführen, um das Abgas auf eine Betriebstemperatur des Beutelfilters (40) abzukühlen;
eine Wiedererwärmungsrückführeinheit (41), die angepasst ist, um das saubere Gas von dem Beutelfilter (40) zu dem Wiedererwärmungsvorwärmer (20) zu leiten, um eine Wiedererwärmung durchzuführen; und
eine Nutzungseinheit (50) eines wiedererwärmten sauberen Gases, das durch den Wiedererwärmungsvorwärmer (20) strömt,
**dadurch gekennzeichnet, dass** das Verbrennungsabgas angepasst ist, um aus einer Wirbelschichtverbrennungsanlage (10) abgeführt zu werden,
die Nutzungseinheit (50) ein Turbolader (50) ist, der mit einer Turbine (51), die angepasst ist, um durch das wiedererwärmte saubere Gas angetrieben zu werden, und einem Kompressor (52) versehen ist, der angepasst ist, um zu rotieren, wenn die Turbine (51) rotiert, und **dass**
Druckluft, die durch den Kompressor (52) des Turboladers (50) erzeugt wird, angepasst ist, um als Fluidisierungsluft für ein fluidisiertes Medium der Wirbelschichtverbrennungsanlage (10) zugeführt zu werden, und
**dass** die Kühleinheit eine erste Kühleinheit (30), die aus einem Abwärmekessel oder einem Wärmetauscher besteht, und eine zweite Kühleinheit (70) ist, die in einer nachfolgenden Stufe des Turboladers (50) bereitgestellt ist und angepasst ist, um einen Wärmeaustausch durchzuführen, wobei das Empfangen eines Turbinenabgas des Turboladers (50) eingeschlossen ist, und **dass** die Wärme, die durch den Wärmeaustausch in der ersten Kühleinheit (30) und der zweiten Kühleinheit (70) zurückgewonnen wird, angepasst ist, um als eine Wärmequelle mindestens eines von einer Wärmequelle zum Trocknen und einer Wärmequelle für eine Leistungserzeugung verwendet zu werden.

2. Verbrennungsanlage, umfassend die Verarbeitungsvorrichtung für Verbrennungsabgase nach Anspruch 1.

3. Verarbeitungsverfahren für Verbrennungsabgase, umfassend die Schritte:
Durchführen eines Wiedererwärmungsvorwärmens mit einem Verbrennungsabgas mit hoher Temperatur;
Entfernen von Staub aus dem Verbrennungsabgas durch einen Beutelfilter (40), um ein sauberes Gas zu erzeugen;
Durchführen eines Wärmeaustauschs durch eine Kühleinheit, die in einem Pfad bereitgestellt ist, der ein Abgas von dem Schritt des Wiedererwärmungsvorwärmens zu dem Beutelfilter (40) leitet, um das Abgas auf eine Betriebstemperatur des Beutelfilters (40) abzukühlen;
Leiten des sauberen Gases von dem Beutelfilter (40) zu dem Schritt des Wiedererwärmungsvorwärmens, um eine Wiedererwärmung durchzuführen; und
Nutzen eines wiedererwärmten sauberen Gases, das durch den Schritt des Wiedererwärmungsvorwärmens geströmt ist, **dadurch gekennzeichnet, dass** das Verbrennungsabgas aus einer Wirbelschichtverbrennungsanlage abgeführt wird,
die Nutzungseinheit ein Turbolader ist, der mit einer Turbine, die durch das wiedererwärmte saubere Gas angetrieben wird, und einem Kompressor versehen ist, der rotiert, wenn die Turbine rotiert, und dass
Druckluft, die durch den Kompressor des Turboladers erzeugt wird, als Fluidisierungsluft für ein fluidisiertes Medium der Wirbelschichtverbrennungsanlage zugeführt wird, und
wobei die Kühleinheit eine erste Kühleinheit (30), die aus einem Abwärmekessel oder einem Wärmetauscher besteht, und eine zweite Kühleinheit (70) ist, die in einer nachfolgenden Stufe des Turboladers (50) bereitgestellt ist und einen Wärmeaustausch durchführt, wobei das Empfangen eines Turbinenabgas des Turboladers (50) eingeschlossen ist, und **dass**
Wärme, die durch Wärmeaustausch in der ersten Kühleinheit (30) und der zweiten Kühleinheit (70) zurückgewonnen wird, als eine Wärmequelle mindestens eines von einer Wärmequelle zum Trocknen und einer Wärmequelle für eine Leistungserzeugung verwendet wird.

4. Verarbeitungsverfahren für Verbrennungsabgase nach Anspruch 3,
wobei die Einlasstemperatur des Beutelfilters (40) 250 °C oder weniger beträgt.

## Revendications

1. Appareil de traitement de gaz d'échappement de combustion comprenant :
un préchauffeur de réchauffage (20) par lequel un gaz d'échappement de combustion à haute température est adapté à traverser et qui est adapté à réaliser un réchauffage avec le gaz d'échappement de combustion ;
un filtre à manche (40) adapté à extraire des poussières du gaz d'échappement de combustion afin de produire un gaz propre ;
une unité de refroidissement qui est prévue sur un chemin adapté à guider un gaz d'échappement du préchauffeur de réchauffage (20) vers le filtre à manche (40) et adaptée à réaliser un échange de chaleur afin de refroidir le gaz d'échappement à une température de fonctionnement du filtre à manche (40) ;
une unité de retour de réchauffage (41) qui est adaptée à guider le gaz propre du filtre à manche (40) vers le préchauffeur de réchauffage (20) pour réaliser le réchauffage ; et
une unité d'utilisation (50) d'un gaz propre réchauffé qui a traversé le préchauffeur de réchauffage (20), **caractérisé en ce que** le gaz d'échappement de combustion est adapté à être évacué d'un incinérateur à lit fluidisé (10),
l'unité d'utilisation (50) est un turbocompresseur (50) équipé d'une turbine (51) adaptée à être entraînée par le gaz propre réchauffé et d'un compresseur (52) qui est adapté à tourner lorsque la turbine (51) tourne, et **en ce que**
de l'air comprimé produit par le compresseur (52) du turbocompresseur (50) est adapté à être envoyé comme air de fluidisation pour un milieu fluidisé de l'incinérateur à lit fluidisé (10), et
**en ce que** l'unité de refroidissement est une première unité de refroidissement (30) composée d'une chaudière de récupération de chaleur ou d'un échangeur de chaleur et une seconde unité de refroidissement (70) qui est prévue au niveau d'un étage ultérieur du turbocompresseur (50) et qui est adaptée à réaliser un échange de chaleur recevant un gaz d'échappement de turbine du turbocompresseur (50) est incluse, et **en ce que** de la chaleur récupérée par échange de chaleur dans la première unité de refroidissement (30) et la seconde unité de refroidissement (70) est adaptée à être utilisée comme source de chaleur d'au moins l'une parmi une source de chaleur pour un séchage et une source de chaleur pour une production d'énergie.

2. Installation d'incinération comprenant l'appareil de traitement de gaz d'échappement de combustion selon la revendication 1.

3. Procédé de traitement de gaz d'échappement de combustion comprenant les étapes consistant à :
réaliser un préchauffage par réchauffage avec un gaz d'échappement de combustion à haute température ;
extraire des poussières du gaz d'échappement de combustion par un filtre à manche (40) pour obtenir un gaz propre ;
réaliser un échange de chaleur par une unité de refroidissement qui est prévue dans un chemin qui guide un gaz d'échappement de l'étage de préchauffage par réchauffage vers le filtre à manche (40) pour refroidir le gaz d'échappement à une température de fonctionnement du filtre à manche (40) ;
guider le gaz propre du filtre à manche (40) vers l'étage de préchauffage par réchauffage pour réaliser un réchauffage ; et
utiliser un gaz propre réchauffé qui a traversé l'étage de réchauffage-préchauffage, **caractérisé en ce que** le gaz d'échappement de combustion est évacué d'un incinérateur à lit fluidisé,
l'unité d'utilisation est un turbocompresseur équipé d'une turbine entraînée par le gaz propre réchauffé et d'un compresseur qui tourne en même temps que la turbine, et **en ce que**
de l'air comprimé produit par le compresseur du turbocompresseur est envoyé comme air de fluidisation pour un milieu fluidisé de l'incinérateur à lit fluidisé, et **en ce que**
dans lequel l'unité de refroidissement est une première unité de refroidissement (30) composée d'une chaudière de récupération de chaleur ou d'un échangeur de chaleur et une seconde unité de refroidissement (70) qui est prévue au niveau d'un étage ultérieur du turbocompresseur (50) et réalise un échange de chaleur recevant un gaz d'échappement de turbine du turbocompresseur (50) est incluse, et **en ce que**
de la chaleur récupérée par échange de chaleur dans la première unité de refroidissement (30) et la seconde unité de refroidissement (70) est utilisée comme source de chaleur d'au moins l'une parmi une source de chaleur pour un séchage et une source de chaleur pour une production d'énergie.

4. Procédé de traitement de gaz d'échappement de combustion selon la revendication 3,
dans lequel une température d'entrée du filtre à manche (40) est inférieure ou égale à 250 °C.
